(19) Europäisches Patentamt
European Patent Office
Office européen des brevets

(11) EP 4 365 214 A1

(12) EUROPEAN PATENT APPLICATION
published in accordance with Art. 153(4) EPC

(43) Date of publication:
08.05.2024 Bulletin 2024/19

(21) Application number: 22833239.1

(22) Date of filing: 29.06.2022

(51) International Patent Classification (IPC):
C08F 220/28 (2006.01) C08F 220/60 (2006.01)
C08K 5/17 (2006.01) C08L 33/14 (2006.01)
C09D 201/00 (2006.01)

(52) Cooperative Patent Classification (CPC):
C08F 220/28; C08F 220/60; C08K 5/17;
C08L 33/14; C09D 201/00

(86) International application number:
PCT/JP2022/026065

(87) International publication number:
WO 2023/277093 (05.01.2023 Gazette 2023/01)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 30.06.2021 JP 2021108589

(71) Applicant: Osaka Organic Chemical Industry Ltd.
Osaka-shi, Osaka 541-0052 (JP)

(72) Inventors:
- YAMAMOTO, Shinpei
Hakusan-shi, Ishikawa 924-0057 (JP)
- FUTAMI, Soichi
Seto-shi, Aichi 489-0071 (JP)
- TAKATA, Yumi
Seto-shi, Aichi 489-0071 (JP)

(74) Representative: Kador & Partner Part mbB
Corneliusstraße 15
80469 München (DE)

# (54) COPOLYMER, COATING MATERIAL, AND ARTICLE

(57) The present invention relates to a copolymer having at least a structural unit (A) having a cyclic carbonate structure and a structural unit (B) having a hydrophilic structure.



Processed by Luminess, 75001 PARIS (FR)

## Description

TECHNICAL FIELD

The present invention relates to a copolymer, a coating agent, and an article.

BACKGROUND ART

Polymers containing a structural unit having a cyclic carbonate structure are widely used in resin compositions for paints. For example, Patent Document 1 discloses a resin composition for paint to be used for coating of automobile parts or the like, the resin composition comprising a polymer composed of a (meth)acrylate having a cyclic carbonate structure and a (meth)acrylate-based monomer, a curing catalyst, and a crosslinking agent. Patent Document 2 discloses a curable resin composition comprising a copolymer containing a repeating unit of a (meth)acrylic acid ester having a 5-membered ring carbonate group and a repeating unit of an alkyl (meth)acrylate.

PRIOR ART DOCUMENT

PATENT DOCUMENTS

Patent Document 1: JP-A-2015-229770
Patent Document 2: JP-A-2005-36081

SUMMARY OF THE INVENTION

PROBLEMS TO BE SOLVED BY THE INVENTION

However, conventional resin compositions containing a polymer containing a structural unit having a cyclic carbonate structure are not used for the applications of a hydrophilic coating agent. In addition, various hydrophilic coating agents are known, but when the hydrophilicity is intended to be improved, the water resistance of a coating is impaired, and the hydrophilicity may be deteriorated over time, and it has been difficult to achieve both high hydrophilicity and high water resistance.
Therefore, an object of the present invention is to provide a coating agent capable of affording a coating having both high hydrophilicity and high water resistance, and a copolymer suitable for the coating agent.

SOLUTIONS TO THE PROBLEMS

In order to solve the above problems, the present inventor studied the structure of a copolymer to be contained in a composition for a coating agent. As a result, the present inventors have found that the above problems are solved by a copolymer having a structural unit (A) having a cyclic carbonate structure and a structural unit (B) having a hydrophilic structure, and have accomplished the present invention.
That is, the present invention includes the following preferred embodiments.

[1] A copolymer comprising at least a structural unit (A) having a cyclic carbonate structure and a structural unit (B) having a hydrophilic structure.
[2] The copolymer according to [1], wherein the structural unit (B) having the hydrophilic structure is neutral in charge.
[3] The copolymer according to [1] or [2], wherein the hydrophilic structure is at least one structure selected from the group consisting of a betaine structure, an amide structure, an alkylene oxide structure, and a lactam structure.
[4] The copolymer according to any one of [1] to [3], wherein the hydrophilic structure comprises a betaine structure having at least one atom selected from the group consisting of a positively charged quaternary nitrogen atom, a positively charged tertiary sulfur atom, and a positively charged quaternary phosphorus atom.
[5] The copolymer according to [4], wherein the betaine structure is represented by formula (1):

[Chemical Formula 1]

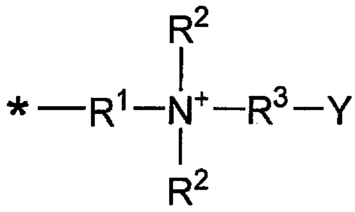

(1)

wherein

$R^1$ represents a linear or branched alkylene group having 1 to 6 carbon atoms,
$R^2$ represents independently at each occurrence a linear or branched alkyl group having 1 to 4 carbon atoms,
$R^3$ represents a linear or branched alkylene group having 1 to 4 carbon atoms,
Y represents $-SO_3^-$ or $-COO^-$, and
* represents a bond.

[6] The copolymer according to any one of [1] to [5], wherein a structural unit (A) and a structural unit (B) are each a structural unit derived from a (meth)acrylic monomer or a vinyl monomer.
[7] A coating agent comprising the copolymer according to any one of [1] to [6] and a crosslinking agent.
[8] The coating agent according to [7], comprising at least a first agent and a second agent, wherein the first agent includes the copolymer according to any one of [1] to [6], and the second agent includes the crosslinking agent.
[9] The coating agent according to [7] or [8], wherein the crosslinking agent is at least one selected from the group consisting of a polyamine and a polyol.
[10] An article coated with a cured film formed from the coating agent according to any one of [7] to [9] wherein the article is neither an elongated medical device nor a constituent member thereof.
[11] The article according to [10], wherein the article is coated with a polymer material in which a copolymer having at least a structural unit (B) having a hydrophilic structure is crosslinked in a crosslinked structure represented by the following formula (2):

$$-X^1\text{-}Z\text{-}R^4\text{-}Z\text{-}X^2- \qquad (2)$$

wherein

$X^1$ and $X^2$ represent, each independently, -CH(OH)-CH($R^6$)-O-C(=O)-* and/or - CH(CH($R^6$)(OH))-O-C(=O)-*, * being bonded to Z in the formula (2),
$R^4$ represents a linear or branched alkylene group having 1 to 11 carbon atoms, an alicyclic hydrocarbon group having 3 to 12 carbon atoms containing an alicyclic structure having 3 to 6 carbon atoms, or an aromatic group having 6 to 20 carbon atoms containing an aromatic ring structure having 6 to 10 carbon atoms,
$R^6$ represents a hydrogen atom or a linear or branched alkyl group or alkenyl group having 1 to 4 carbon atoms, wherein at least one hydrogen atom of $R^6$ may be replaced by a halogen atom, and at least one carbon atom (-C-) may be replaced by -O-, -S-, -P-, and Z represents -O- or -N(-H)-.

EFFECTS OF THE INVENTION

By the present invention, it is possible to provide a coating agent capable of affording a coating having both high hydrophilicity and high water resistance, and a copolymer suitable for the coating agent.

BRIEF DESCRIPTION OF THE DRAWINGS

Fig. 1 is an explanatory diagram showing an evaluation result of adhesion.
Fig. 2 is an explanatory diagram showing a change with time in the viscosity of a coating agent.

DETAILED DESCRIPTION

Hereinafter, embodiments of the present invention will be described in detail. The scope of the present invention is not limited to the embodiments described herein, and various modifications can be made without departing from the

spirit of the present invention.

[Copolymer]

The copolymer of the present invention is a copolymer comprising at least a structural unit (A) having a cyclic carbonate structure and a structural unit (B) having a hydrophilic structure. By using a copolymer having a combination of the structural unit (A) having a cyclic carbonate structure and the structural unit (B) having a hydrophilic structure, it is possible to impart high hydrophilicity and water resistance to the surface of an article coated with a cured product of the copolymer.

(Structural unit (A) having cyclic carbonate structure)

The structural unit (A) having a cyclic carbonate structure is a structural unit derived from a monomer having the cyclic carbonate structure. When a copolymer comprises the structural unit (A) having a cyclic carbonate structure, the water resistance of a surface of a substrate coated with a cured product of the copolymer can be improved. The cyclic carbonate structure may be a cyclic carbonate group, and the number of ring members of the cyclic carbonate group moiety is preferably 3 to 8, more preferably 4 to 7, and still more preferably 5 to 6. Examples of such a cyclic carbonate structure include a structure containing an ethylene carbonate group, a propylene carbonate group, a butylene carbonate group, or a pentylene carbonate group which each may have a substituent, and preferably a structure containing an ethylene carbonate group which may have a substituent. The cyclic carbonate structure preferably may be a structure represented by the following formula (3):

[Chemical Formula 2]

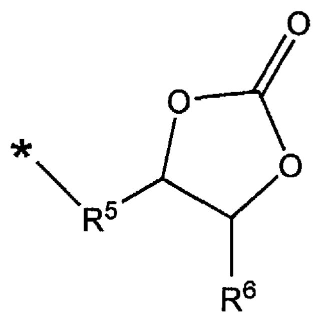

(3)

wherein

$R^5$ represents a linear or branched alkylene group or alkenylene group having 1 to 4 carbon atoms, wherein at least one hydrogen atom of $R^5$ may be replaced by a halogen atom, and at least one carbon atom (-C-) may be replaced by -O-, -S-, or -P-,
$R^6$ represents a hydrogen atom or a linear or branched alkyl group or alkenyl group having 1 to 4 carbon atoms, wherein at least one hydrogen atom of $R^6$ may be replaced by a halogen atom, and at least one carbon atom (-C-) may be replaced by -O-, -S-, or -P-. The copolymer of the present invention may have one type of the structural unit (A) having a cyclic carbonate structure, or may have two or more types of the structural unit (A).

Examples of the linear or branched alkylene group having 1 to 4 carbon atoms as $R^5$ include a methylene group, an ethylene group, an n-propylene group, an isopropylene group, an n-butylene group, a methylmethylene group, a methylethylene group, a dimethylethylene group, and a methylpropylene group. Examples of the linear or branched alkenylene group having 1 to 4 carbon atoms include a group in which at least one, preferably one, of the direct carbon-carbon bonds of the alkylene group recited above is replaced by an unsaturated double bond. From the viewpoint of easily improving water resistance, $R^5$ is preferably a linear or branched alkylene group having 1 to 4 carbon atoms.
Examples of the linear or branched alkyl group having 1 to 4 carbon atoms as $R^6$ include a methyl group, an ethyl group, a n-propyl group, an isopropyl group, a n-butyl group, and an isobutyl group. Examples of the linear or branched alkenyl group having 1 to 4 carbon atoms include a group in which at least one, preferably one, of the direct carbon-carbon bonds of the alkyl group recited above is replaced by an unsaturated double bond. From the viewpoint of improving water resistance, $R^6$ is preferably a hydrogen atom or a methyl group, and more preferably a hydrogen atom.

(Structural unit (B) having hydrophilic structure)

The structural unit (B) having a hydrophilic structure is a structural unit derived from a monomer having the hydrophilic structure. The hydrophilic structure is not particularly limited as long as it is a structure having a hydrophilic group that easily enhances the hydrophilicity of the copolymer, and from the viewpoint of easily enhancing the hydrophilicity of the copolymer, the hydrophilic structure is preferably at least one structure selected from the group consisting of a betaine structure, an amide structure, an alkylene oxide structure, and a lactam structure. The structural unit (B) is preferably neutral in charge from the viewpoint of biocompatibility, protein adhesion-preventing property, and cell adhesion-preventing property. The state that the structural unit (B) is neutral in charge means that the cationic charge and the anionic charge in the structural unit (B) are zero in total.

The copolymer of the present invention may have one type of the structural unit (B) having a hydrophilic structure, or may have two or more types of the structural unit (B). In one preferred embodiment of the present invention, the structural unit (B) having a hydrophilic structure in the copolymer of the present invention contains at least a structural unit (B1) having a betaine structure. In this case, the structural unit (B) may further have, in addition to the structural unit (B1), a structural unit (B2) having at least one structure selected from the group consisting of an amide structure, an alkylene oxide structure, and a lactam structure from the viewpoint of improving the coatability of the coating agent and well affording a flexible cured film. In this embodiment, from the viewpoint of enhancing the hydrophilicity and water resistance of a cured film of the present invention and enhancing the swellability of the cured film, the amount of the structural unit (B1) having a betaine structure in the copolymer of the present invention is preferably 10 mol% or more, more preferably 20 mol% or more, still more preferably 30 mol% or more, and further preferably 40 mol% or more based on the amount of all structural units contained in the copolymer of the present invention. Note that the betaine structure refers to a structure in which a positive charge and a negative charge are held at positions not adjacent to each other in the same molecule, hydrogen that can be dissociated is not bonded to an atom having a positive charge, and the structure is neutral (in other words, has no charge) as a whole. In the betaine structure, as a functional group having a positive charge, for example, any of quaternary ammonium, tertiary sulfonium, and quaternary phosphonium can be used, and as a functional group having a negative charge, for example, any of sulfonic acid, carboxylic acid, and phosphonic acid can be used. That is, the betaine structure can be, for example, a sulfobetaine, a carboxybetaine, or a phosphobetaine.

From the viewpoint of enhancing the hydrophilicity of the copolymer, the hydrophilic structure in the structural unit (B) having a hydrophilic structure preferably comprises a betaine structure having at least one atom selected from the group consisting of a positively charged quaternary nitrogen atom, a positively charged tertiary sulfur atom, and a positively charged quaternary phosphorus atom, and more preferably comprises a betaine structure having a positively charged quaternary nitrogen atom. A betaine structure having a positively charged quaternary nitrogen atom is preferable because it can act as a catalyst in a crosslinking reaction with a crosslinking agent in a coating agent comprising the copolymer of the present invention.

The betaine structure having a positively charged quaternary nitrogen atom is preferably represented by formula (1):

[Chemical Formula 3]

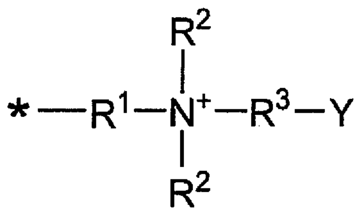

(1)

wherein

- $R^1$ represents a linear or branched alkylene group having 1 to 6 carbon atoms,
- $R^2$ represents independently at each occurrence a linear or branched alkyl group having 1 to 4 carbon atoms,
- $R^3$ represents a linear or branched alkylene group having 1 to 4 carbon atoms,
- Y represents $-SO_3^-$ or $-COO^-$, and
- * represents a bond.

The betaine structure having a positively charged tertiary sulfur atom is preferably represented by formula (4):

[Chemical Formula 4]

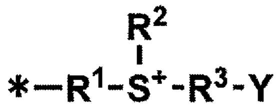

(4)

wherein

$R^1$ represents a linear or branched alkylene group having 1 to 6 carbon atoms,
$R^2$ represents a linear or branched alkyl group having 1 to 4 carbon atoms,
$R^3$ represents a linear or branched alkylene group having 1 to 4 carbon atoms,
Y represents $-SO_3^-$ or $-COO^-$, and
* represents a bond.

The betaine structure having a positively charged quaternary phosphorus atom is preferably represented by formula (5):

[Chemical Formula 5]

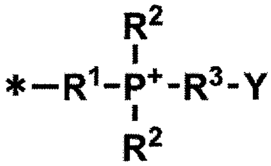

(5)

wherein

$R^1$ represents a linear or branched alkylene group having 1 to 6 carbon atoms,
$R^2$ represents independently at each occurrence a linear or branched alkyl group having 1 to 4 carbon atoms,
$R^3$ represents a linear or branched alkylene group having 1 to 4 carbon atoms,
Y represents $-SO_3^-$ or $-COO^-$, and
* represents a bond.

Examples of the linear or branched alkylene group having 1 to 6 carbon atoms as $R^1$ in the formulae (1), (4), and (5) include a methylene group, an ethylene group, an n-propylene group, an isopropylene group, an n-butylene group, an n-pentylene group, an n-hexylene group, an isobutylene group, a methylmethylene group, a methylethylene group, a dimethylethylene group, a methylpropylene group, a methylbutylene group, and a methylpentylene group. From the viewpoint of easily improving hydrophilicity, $R^1$ is preferably a linear or branched alkylene group having 1 to 4 carbon atoms, and more preferably a linear or branched alkylene group having 1 to 3 carbon atoms.

Examples of the linear or branched alkyl group having 1 to 4 carbon atoms as $R^2$ in the formulae (1), (4), and (5) include a methyl group, an ethyl group, a n-propyl group, an isopropyl group, a n-butyl group, and an isobutyl group. From the viewpoint of easily improving hydrophilicity, $R^2$ is preferably an alkyl group having 1 to 3 carbon atoms, more preferably a methyl group or an ethyl group, and still more preferably a methyl group.

Examples of the linear or branched alkylene group having 1 to 4 carbon atoms as $R^3$ in the formulae (1), (4), and (5) include a methylene group, an ethylene group, an n-propylene group, an isopropylene group, an n-butylene group, a methylmethylene group, a methylethylene group, a dimethylethylene group, and a methylpropylene group. From the viewpoint of easily improving hydrophilicity, $R^3$ is preferably an alkylene group having 1 to 3 carbon atoms, more preferably a methylene group or an ethylene group, and still more preferably a methylene group.

Y in the formulae (1), (4) and (5) represents $-SO3^-$ or $-COO^-$, and preferably - $COO^-$.

The amide structure refers to a structure having -C(=O)-NH-, and typical examples thereof include a (meth)acrylamide structure having a (meth)acrylic group. Examples of a monomer having the (meth)acrylamide structure include (meth)acrylamide, N,N-dimethyl(meth)acrylamide, N-(meth)acrylmorpholide, N-methoxymethyl(meth)acrylamide, N-hydroxymethyl(meth)acrylamide, N-hydroxyethyl(meth)acrylamide, N,N-diethyl(meth)acrylamide, N-monomethyl(meth)acrylamide, and N-monoethyl(meth)acrylamide.

The alkylene oxide structure refers to a structure in which part of the carbon forming an alkyl chain is replaced

by oxygen. Examples of a monomer having the alkylene oxide structure include ethylene glycol, methoxyethylene glycol, ethoxyethylene glycol, 2-propylene glycol, 2-methoxypropylene glycol, 2-ethoxypropylene glycol, 3-propylene glycol, 3-methoxypropylene glycol, 3-ethoxypropylene glycol, 2-butylene glycol, 3-butylene glycol, 4-butylene glycol, polyethylene glycol, methoxypolyethylene glycol, polypropylene glycol, methoxypolypropylene glycol, and polybutylene glycol. Other examples of a monomer having the alkylene oxide structure include monomers having a (meth)acrylic group, and examples thereof include 2-hydroxyethyl (meth)acrylate, 2-hydroxypropyl (meth)acrylate, 4-hydroxybutyl (meth)acrylate, polyethylene glycol (meth)acrylate, methoxypolyethylene glycol (meth)acrylate, ethoxypolyethylene glycol (meth)acrylate, polyethylene glycol di(meth)acrylate, and 2-hydroxyethyl vinyl ether.

The lactam structure is a structure in which a carboxy group and an amino group form a ring through dehydration condensation, and examples thereof include $\alpha$-lactam (three-membered ring), $\beta$-lactam (four-membered ring), $\gamma$-lactam (five-membered ring), and $\delta$-lactam (six-membered ring). Examples of a monomer having the lactam structure include N-vinyl-2-caprolactam, N-vinylpyrrolidone, and N-vinylpiperidone.

(Other structural units)

The copolymer of the present invention may further have another structural unit in addition to one type or two or more types of the structural unit (A) and one type or two or more types of the structural unit (B). Examples of the other structural unit include a structural unit derived from an alkoxyalkyl group-containing (meth)acrylic monomer such as 2-methoxyethyl (meth)acrylate, and a structural unit derived from an acrylamide monomer such as diacetone (meth)acrylamide, N-methylol(meth)acrylamide, and hydroxyethyl(meth)acrylamide.

From the viewpoint of water resistance and swellability, the total amount of the structural unit (A) and the structural unit (B) contained in the copolymer of the present invention is preferably 20 mol% or more, more preferably 30 mol% or more, and still more preferably 50 mol% or more based on the total amount of the structural units contained in the copolymer of the present invention. The total amount may be any value of 100 mol% or less. The amounts of the structural unit (A) and the structural unit (B) in the copolymer may be calculated by analyzing the structure of the copolymer by NMR or the like, or may be calculated from the amount of each monomer when the copolymer is produced.

From the viewpoint of swellability, the molar ratio (A/B) of the structural unit (A) to the structural unit (B) contained in the copolymer of the present invention is preferably 1199 or more, more preferably 5/95 or more, and still more preferably 10/90 or more, and is preferably 99/1 or less, more preferably 50/50 or less, still more preferably 30/70 or less, and particularly preferably 25/75 or less.

The proportion of the structural unit (A) contained in the copolymer of the present invention is preferably 3 mol% or more, and more preferably 5 mol% or more based on the amount of all structural units from the viewpoint of easily enhancing the water resistance of the copolymer and easily enhancing the adhesion. The proportion of the structural unit (A) is preferably 30 mol% or less, more preferably 25 mol% or less, still more preferably 20 mol% or less, and further preferably 15 mol% or less.

The proportion of the structural unit (B) (hydrophilic monomer) contained in the copolymer of the present invention is preferably 60 mol% or more, more preferably 70 mol% or more, and still more preferably 80 mol% or more based on the amount of all structural units from the viewpoint of easily enhancing the water resistance of the copolymer and easily enhancing the adhesion. The proportion of the structural unit (B) is preferably 98 mol% or less, and more preferably 95 mol% or less.

When the structural unit (B) (hydrophilic monomer) contained in the copolymer of the present invention comprises the structural unit (B1) (structural unit having a betaine structure), the proportion of the structural unit (B 1) is preferably 20 mol% or more, more preferably 30 mol% or more, and still more preferably 40 mol% or more based on the amount of all structural units from the viewpoint of easily enhancing the water resistance of the copolymer and easily enhancing the adhesion. The proportion of the structural unit (B1) is preferably 98 mol% or less, and more preferably 95 mol% or less.

When the structural unit (B) contained in the copolymer of the present invention comprises the structural units (B1) and (B2), the proportion of the structural unit (B1) is preferably 20 mol% or more, more preferably 30 mol% or more, and still more preferably 40 mol% or more, and is preferably 98 mol% or less, and more preferably 95 mol% or less based on the amount of all structural units, and the proportion of the structural unit (B2) is preferably 20 mol% or more, more preferably 30 mol% or more, and still more preferably 40 mol% or more, and is preferably 70 mol% or less, and more preferably 60 mol% or less based on the amount of all structural units.

The structural units (A) and (B) and other structural units optionally contained are derived from monomers having polymerizable groups copolymerizable with each other. Examples of such monomers include (meth)acrylic monomers or vinyl monomers. The structural units (A) and (B) are preferably structural units each derived from a (meth)acrylic monomer or a vinyl monomer from the viewpoint of ease of the production of the copolymer.

When the structural units (A) and (B) are (meth)acrylic monomers, the structural unit (A) may be, for example, a structural unit derived from a monomer represented by the following formula (6):

[Chemical Formula 6]

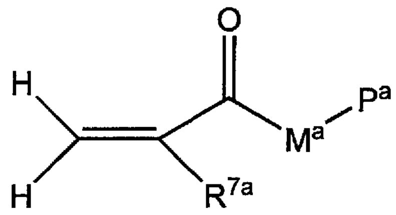

(6)

wherein

$R^{7a}$ is a hydrogen atom or a methyl group,
$M^a$ represents -NH- or -O-, and
$P^a$ represents a cyclic carbonate structure, and preferably represents the above formula (3). As such a monomer, for example, (2-oxo-1,3-dioxolan-4-yl)methyl methacrylate (GCMA) or (2-oxo-1,3-dioxolan-4-yl)methyl acrylate (GCA) can be used, and (2-oxo-1,3-dioxolan-4-yl)methyl methacrylate (GCMA) is preferred.

The structural unit (B) may be a structural unit derived from a monomer represented by the following formula (7):

[Chemical Formula 7]

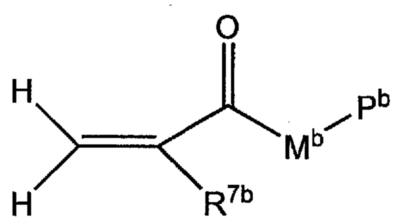

(7)

wherein

$R^{7b}$ is a hydrogen atom or a methyl group,
$M^b$ represents -NH- or -O-, and
$P^b$ represents a hydrophilic structure, and preferably represents a betaine structure, an amide structure, an alkylene oxide structure, or a lactam structure. In one preferred embodiment, the structural unit (B) is preferably a structural unit derived from a monomer in which $P^b$ in the formula (7) is preferably a betaine structure, more preferably a structure represented by any one of the formulae (1), (4) and (5), and still more preferably a structure represented by the formula (1). In one further preferred embodiment, the structural unit (B) may comprise a structural unit (B1) derived from a monomer in which $P^b$ in the formula (7) is preferably a betaine structure, more preferably a structure represented by any one of the formulae (1), (4) and (5), and still more preferably a structure represented by the formula (1), and a structural unit (B2) derived from a monomer in which $P^b$ in the formula (7) is preferably an amide structure, an alkylene oxide structure, or a lactam structure.

When the structural units (A) and (B) are vinyl monomers, the structural unit (A) may be, for example, a structural unit derived from a monomer represented by the following formula (8):

[Chemical Formula 8]

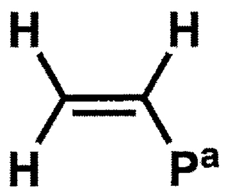

(8)

wherein, $P^a$ represents a cyclic carbonate structure, and preferably represents the above formula (3).

The structural unit (B) may be, for example, a structural unit derived from a monomer represented by the following formula (9):

[Chem. 9]

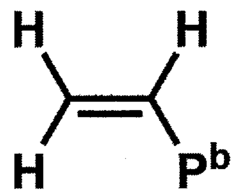

(9)

wherein, $P^b$ represents a hydrophilic structure, and preferably represents a betaine structure, an amide structure, an alkylene oxide structure, or a lactam structure. In one preferred embodiment, the structural unit (B) is preferably a structural unit derived from a monomer in which $P^b$ in the formula (9) is preferably a betaine structure, more preferably a structure represented by any one of the formulae (1), (4) and (5), and still more preferably a structure represented by the formula (1). In one further preferred embodiment, the structural unit (B) may comprise a structural unit (B1) derived from a monomer in which $P^b$ in the formula (9) is preferably a betaine structure, more preferably a structure represented by any one of the formulae (1), (4) and (5), and still more preferably a structure represented by the formula (1), and a structural unit (B2) derived from a monomer in which $P^b$ in the formula (9) is preferably an amide structure, an alkylene oxide structure, or a lactam structure.

The copolymer of the present invention is preferably soluble in water, more preferably soluble in water and methanol, still more preferably soluble in water, methanol, and ethanol, and further preferably soluble in water, methanol, ethanol, and isopropanol from the viewpoint of easily enhancing the stability of a coating agent and easily enhancing the adhesion to a substrate surface during coating. Whether or not the copolymer of the present invention is soluble in a solvent such as water is determined by adding 90 parts of the solvent to 10 parts of a solid obtained by drying the copolymer, stirring the mixture at room temperature for 30 minutes, leaving the mixture to stand for 24 hours, and then determining that the copolymer is soluble when a transparent solution is obtained, and determining that the copolymer is not soluble when there remains some solid undissolved in the solution or the solution is cloudy.

[Method for production of copolymer]

The copolymer of the present invention can be produced by copolymerizing a monomer having a cyclic carbonate structure and a monomer having a hydrophilic structure, which have polymerizable groups capable of being copolymerized with each other, optionally together with another monomer. When the copolymer is produced, it is preferable to use at least one polymerization initiator from the viewpoint of promoting the polymerization reaction of the monomer components. Examples of the polymerization initiator include azo-based lipid-soluble polymerization initiators such as azoisobutyronitrile, methyl azoisobutyrate, and azobisdimethylvaleronitrile; azo-based water-soluble polymerization initiators such as 2,2'-azobis[2-(2-imidazolin-2-yl)propane], 2,2'-azobis[2-(2-imidazolin-2-yl)propane] dihydrochloride, and 2,2'-azobis[2-methyl-N-(2-hydroxyethyl)propionamide]; inorganic peroxides such as benzoyl peroxide, potassium persulfate, and ammonium persulfate; and photopolymerization initiators such as benzophenone derivatives, phosphine oxide derivatives, benzoketone derivatives, phenylthioether derivatives, azide derivatives, diazo derivatives, and disulfide derivatives, but the present invention is not limited only to these examples. Such polymerization initiators may be used singly, or two or more of them may be used in combination.

The amount of the polymerization initiator is not particularly limited, but is usually preferably about 0.01 to 5 parts by mass per 100 parts by mass of the monomer components.

Examples of the polymerization method for producing the copolymer of the present invention include a bulk polymerization method, a solution polymerization method, an emulsion polymerization method, and a suspension polymerization method, but the present invention is not limited to these examples. Among these polymerization methods, a solution polymerization method is preferable. In the case of polymerizing monomer components by a solution polymerization method, for example, the monomer components can be polymerized by dissolving the monomer components in a solvent and adding a polymerization initiator while stirring the solution obtained. Although the polymerization method for producing the copolymer may be either photopolymerization or thermal polymerization, thermal polymerization is preferable from the viewpoint of manufacturability.

Examples of the solvent include water; alcohols such as methyl alcohol, ethyl alcohol, isopropyl alcohol, ethylene glycol, and propylene glycol; ketones such as acetone and methyl ethyl ketone; ethers such as diethyl ether and tetrahydrofuran; aromatic hydrocarbon compounds such as benzene, toluene, and xylene; aliphatic hydrocarbon compounds such as n-hexane; alicyclic hydrocarbon compounds such as cyclohexane; acetic acid esters such as methyl acetate and ethyl acetate; and aprotic polar solvents such as dimethylformamide (hereinafter, referred to as DMF) and dimethyl sulfoxide (hereinafter, referred to as DMSO), but the present invention is not limited only to these examples. These solvents may be used singly or two or more of them may be used in combination.

In usual, the amount of the solvent is preferably adjusted such that the concentration of the monomer components in a solution obtained by dissolving the monomer components in the solvent is about 10 to 80% by mass.

Polymerization conditions set when the monomer components are polymerized, such as the polymerization temperature and the polymerization time, are preferably appropriately adjusted according to the type and use amount of the monomers to be used as the monomer components, the type and use amount of the polymerization initiator, and so on.

The atmosphere for polymerizing the monomer components is preferably an inert gas. Examples of the inert gas include nitrogen gas and argon gas, but the present invention is not limited to these examples.

The weight-average molecular weight of the copolymer of the present invention is preferably 100 or more, more preferably 500 or more, still more preferably 1,000 or more, further preferably 10,000 or more, and particularly preferably 50,000 or more from the viewpoint of easily enhancing the hydrophilicity and water resistance of a coating (cured film) formed using the copolymer, and is preferably 1,000,000 or less, more preferably 500,000 or less, still more preferably 200,000 or less, and further preferably 150,000 or less from the viewpoint of solubility in a solvent or the like and ease of coating when used as a coating material. The weight-average molecular weight of the copolymer of the present invention can be determined by gel permeation chromatography (hereinafter referred to as GPC). The weight-average molecular weight by GPC may be measured using, for example, trifluoroethanol as an eluent and using a column (for example, Wako Beads G-50 manufactured by FUJIFILM Wako Pure Chemical Corporation). As a molecular weight standard, polyethylene glycol may be used.

The viscosity-average molecular weight of the copolymer of the present invention is preferably 100 or more, more preferably 500 or more, still more preferably 1,000 or more, and further preferably 10,000 or more from the viewpoint of easily enhancing the hydrophilicity and water resistance of a coating formed using the copolymer, and is preferably 1,000,000 or less, more preferably 500,000 or less, and still more preferably 200,000 or less from the viewpoint of solubility in a solvent or the like and ease of coating when used as a coating material. The viscosity-average molecular weight of the copolymer of the present invention may be measured using, for example, the method described in Examples.

[Coating agent]

The present invention also provides a coating agent comprising the copolymer described above. The amount of the copolymer of the present invention contained in the coating agent of the present invention is not particularly limited, but is preferably 1% by mass or more, more preferably 10% by mass or more, and still more preferably 15% by mass or more based on the total amount of the coating agent of the present invention from the viewpoint of easily imparting high hydrophilicity and water resistance to a film, a hydrogel, or the like obtained from the coating agent. The amount of the copolymer is not particularly limited, and may be 100% by mass or less, or 90% by mass or less. The coating agent of the present invention may comprise one type of the copolymer of the present invention, or may comprise two or more types of the copolymer of the present invention.

The coating agent of the present invention may further comprise at least one crosslinking agent in addition to at least one type of the copolymer of the present invention. The crosslinking agent is not particularly limited as long as it is a compound capable of crosslinking the copolymer contained in the coating agent of the present invention, but from the viewpoint of easily enhancing the water resistance of a cured film of the coating agent of the present invention, a crosslinking agent capable of undergoing a crosslinking reaction with the cyclic carbonate structure in the copolymer of the present invention is preferable. Examples of such a crosslinking agent include polyamines, polyols, and polycarboxylic acids, but the present invention is not limited only to these examples. These crosslinking agents may be used singly, or two or more of them may be used in combination. From the viewpoint of the reactivity with the structural unit (A), the crosslinking agent is preferably at least one selected from the group consisting of polyamines and polyols, and more preferably a polyamine.

The polyamine is a compound having two or more amine groups. As the polyamine, either an aliphatic polyamine having an aliphatic structure or an aromatic polyamine having an aromatic structure may be used, and from the viewpoint of forming a cured product superior in adhesion to an object to be applied and yellowing resistance after curing, an aliphatic polyamine is preferable, and an aliphatic polyamine having two or more amine groups is more preferable. The aliphatic polyamine may have an alicyclic structure. Examples of suitable aliphatic polyamines include polyoxyalkylene diamines such as isophorone diamine, norbornene diamine, 1,3-bisaminomethylcyclohexane, diethylenetriamine, triethylenetetramine, 4,4'-diaminocyclohexylmethane, ethylenediamine, 1,3-diaminopropane, 1,4-diaminobutane, 1,5-diaminopentane, 1,6-diaminohexane, 1,7-diaminoheptane, 1,8-diaminooctane, 1,9-diaminononane, 1,10-diaminodecane,

1,12-diaminododecane, tetraethylenepentamine, pentaethylenehexamine, polyoxyethylenediamine, and polyoxypropylenediamine; polyoxyalkylene triamines such as polyoxyethylene triamine and polyoxypropylene triamine; and aminoethylated acrylic polymers.

The polyol is a compound having two or more hydroxy groups. Examples of the polyol include polyester polyols, polyether polyols, and polycarbonate polyols. Examples of the polyester polyol include a condensation polymer of a polyhydric alcohol and a polyvalent carboxylic acid, and a ring-opening polymer. In the condensation polymer of a polyhydric alcohol and a polyvalent carboxylic acid, examples of the polyol include ethylene glycol, propylene glycol, butanediol, pentanediol, hexanediol, cyclohexanedimethanol, glycerin, and 1,1,1-trimethylolpropane. Examples of the polyether polyol include a polymer of a polyol and an alkylene oxide, and a ring-opening polymer. In the polymer of a polyhydric alcohol and an alkylene oxide, examples of the polyol include ethylene glycol, diethylene glycol, polyoxyethylene glycol, propylene glycol, dipropylene glycol, polypropylene glycol, polyoxypropylene glycol, glycerin, 1,1,1-trimethylolpropane, 1,2,5-hexanetriol, 1,3-butanediol, 1,4-butanediol, polyoxypropylene triol, 4,4'-dihydroxyphenylpropane, 4,4'-dihydroxyphenylmethane, and pentaerythritol. Examples of the alkylene oxide include propylene oxide, ethylene oxide, butylene oxide, and styrene oxide. Examples of the ring-opening polymer include polytetramethylene glycol obtained by ring-opening polymerization of tetrahydrofuran or the like.

When the coating agent of the present invention contains a crosslinking agent, the amount of the crosslinking agent contained in the coating agent is not particularly limited, but is preferably 0.01 to 99.99% by mass, more preferably 0.1 to 99.9% by mass, still more preferably 1 to 99% by mass, and further preferably 2 to 98% by mass based on the total amount of the coating agent of the present invention from the viewpoint of easily enhancing the water resistance of a cured film of the coating agent of the present invention. From the viewpoint of easily enhancing the water resistance of a cured film of the coating agent of the present invention, the mass ratio of the amount of the crosslinking agent (curing agent) to the amount of the copolymer of the present invention contained in the coating agent of the present invention is preferably copolymer : curing agent = 10 or less : 1, more preferably copolymer : curing agent = 8 or less : 1, and still more preferably copolymer : curing agent = 6 or less : 1.

The coating agent of the present invention may further comprise at least one solvent in addition to at least one type of the copolymer described above. Examples of the solvent include water; alcohol solvents such as methyl alcohol, ethyl alcohol, isopropyl alcohol, ethylene glycol, and propylene glycol; ketones such as acetone and methyl ethyl ketone; ethers such as diethyl ether and tetrahydrofuran; and aprotic polar solvents such as DMF and DMSO, but the present invention is not limited only to these examples. These solvents may be used singly, or two or more of them may be used in combination. From the viewpoint of easily enhancing the handleability of the coating agent of the present invention, the solvent is preferably water or an alcohol solvent.

The amount of the solvent contained in the coating agent of the present invention is not particularly limited, but is preferably 0.01 to 99.99% by mass and more preferably 0.1 to 99.9% by mass based on the total amount of the coating agent of the present invention.

In one preferred embodiment of the present invention, the coating agent of the present invention may be a two-agent type coating agent including at least a first agent and a second agent. In this case, for example, the copolymer of the present invention may be contained in the first agent, and a crosslinking agent may be contained in the second agent. In this embodiment, a coating agent having superior stability can be provided because a reaction between the copolymer in the first agent and the crosslinking agent in the second agent during storage can be prevented. In this embodiment, the first agent and the second agent are mixed preferably 1 minute to 24 hours, more preferably 1 minute to 12 hours, and still more preferably 1 minute to 2 hours before using the coating agent, and the mixture obtained is used as a coating agent. The mixing ratio of the first agent to the second agent is preferably 10 : 1 to 1 : 10, and more preferably 5 : 1 to 1 : 5 based on the mass ratio of the copolymer in the first agent to the crosslinking agent in the second agent.

The coating agent of the present invention may comprise other components in addition to the copolymer, the crosslinking agent, and the solvent optionally contained. The other component may be appropriately selected according to the application of the coating agent of the present invention, and examples thereof include inorganic particles, organic particles, pigments, dyes, thickeners, surface tension agents, wettability modifiers, thixotropy modifiers, surfactants, defoamers, antioxidants, and ultraviolet absorbers. The amount of the other component may also be appropriately adjusted according to the application of the coating agent of the present invention and the function of the other component, and is, for example, 0.01 to 99.99% by mass based on the coating agent of the present invention.

The crosslinking reaction between the copolymer contained in the coating agent of the present invention and the crosslinking agent capable of crosslinking the copolymer proceeds even at a relatively low temperature of, for example, about 80°C. In addition, since the reaction irreversibly proceeds even in water, a coating film having superior water resistance can be afforded. Taking as an example the case where the crosslinking agent is a polyamine (for example, a diamine), the chemical reaction between the copolymer and the crosslinking agent contained in the coating agent of the present invention will be described using the following formula.

[Chemical Formula 10]

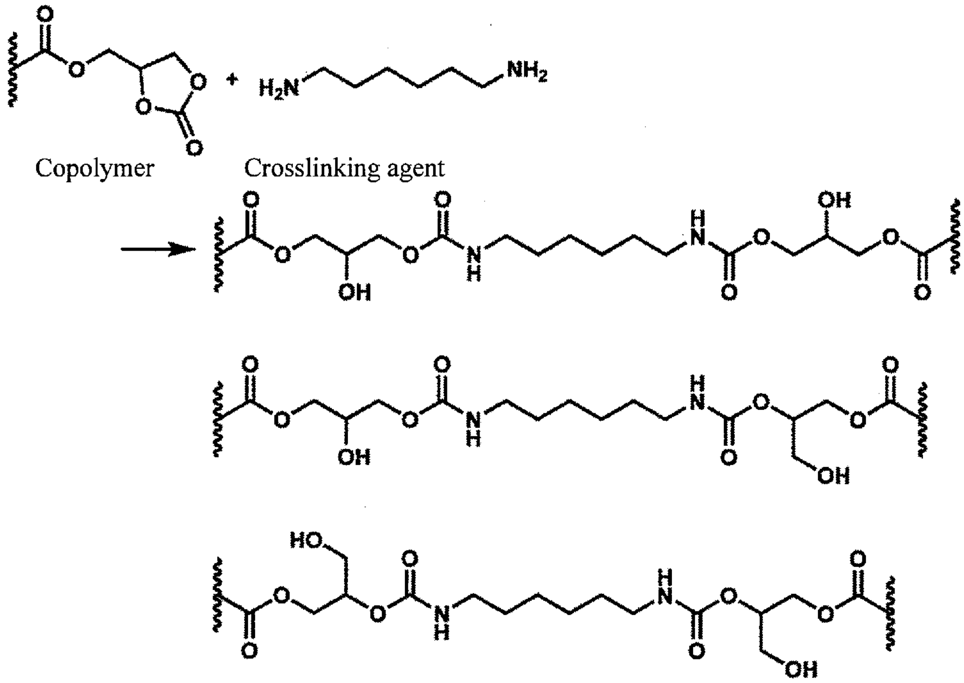

Copolymer Crosslinking agent

( i )

( ii )

( iii )

When the copolymer of the present invention having at least a structural unit (A) having a cyclic carbonate structure and a structural unit (B) having a hydrophilic structure reacts with a crosslinking agent (for example, a polyamine), the cyclic carbonate group is ring-opened at the -C(=O)-O- linkage portion to react with the crosslinking agent as described above, and the main chains of the copolymer having the structural unit (B) having a hydrophilic structure are crosslinked with the polyhydroxyurethane linkage portion interposing therebetween.

For example, one example of the copolymer and the crosslinking agent of the present invention will be described using the above chemical reaction formula. In the above chemical reaction formula, the portion of the structural unit (A) of the copolymer reacts with the crosslinking agent, and the reaction occurs at both ends of the crosslinking agent, whereby the main chains of the copolymer represented by wavy lines are crosslinked with the polyhydroxyurethane linkage portion interposing therebetween. Here, the crosslinked structures (i) to (iii) can be generated depending on which -C(=O)-O- linkage moiety the ring opening of the cyclic carbonate group occurs. Note that in the above chemical formula, the structural unit (B) having a hydrophilic structure of the copolymer is omitted. In the above scheme, when a polyol is used instead of the polyamine as the crosslinking agent, a crosslinked structure in which the -N(-H)- moiety is replaced by -O- is formed.

As a result, in one preferred embodiment of the present invention, the article obtained after crosslinking which is coated with a cured film of the coating agent of the present invention is an article coated with a polymer material in which a copolymer having at least a structural unit (B) having a hydrophilic structure is crosslinked in a crosslinked structure represented by the following formula (2):

$$-X^1-Z-R^4-Z-X^2- \quad (2)$$

wherein

$X^1$ and $X^2$ represent, each independently, -CH(OH)-CH($R^6$)-O-C(=O)-* and/or - CH(CH($R^6$)(OH))-O-C(=O)-*, * being bonded to Z in the formula (2),

$R^4$ represents a linear or branched alkylene group having 1 to 11 carbon atoms, an alicyclic hydrocarbon group having 3 to 12 carbon atoms containing an alicyclic structure having 3 to 6 carbon atoms, or an aromatic group having 6 to 20 carbon atoms containing an aromatic ring structure having 6 to 10 carbon atoms; $R^4$ preferably represents a linear alkylene group having 1 to 11 carbon atoms, more preferably represents a linear alkylene group having 1 to 6 carbon atoms, and still more preferably represents a linear alkylene group having 4 to 6 carbon atoms,

$R^6$ represents a hydrogen atom or a linear or branched alkyl group or alkenyl group having 1 to 4 carbon atoms, wherein at least one hydrogen atom of $R^6$ may be replaced by a halogen atom, and at least one carbon atom (-C-)

may be replaced by -O-, -S-, -P-, and Z represents -O- or -N(-H)-. Z in the formula (2) is preferably -N(-H) - from the viewpoint of easily enhancing the hydrophilicity of the copolymer. For $R^6$ in the formula (2), the description for $R^6$ in the formula (3) applies analogously.

Since a hydroxy group is generated in association with the ring opening of the cyclic carbonate structure of the structural unit (A) of the coating agent, when a substrate is, for example, a metal member having a hydroxy group on a surface thereof, the hydroxy group generated in association with the ring opening of the cyclic carbonate structure and the hydroxy group on the surface of the metal member are hydrogen-bonded. As a result, a hydrophilic coating film can be favorably brought into close contact with the substrate along with the formation of the hydrophilic coating film. In addition, since a urethane linkage is formed along with the ring opening of the cyclic carbonate structure of the structural unit (A) of the coating agent, for example, when a substrate surface is formed of a urethane resin, the urethane linkage formed along with the ring opening of the cyclic carbonate structure and a urethane structure on the substrate surface are compatible with each other. As a result, a hydrophilic coating film can be favorably brought into close contact with the substrate along with the formation of the hydrophilic coating film. As described above, since a hydroxy group or a urethane linkage is generated on the surface of the substrate through the reaction that proceeds on the surface of the substrate after the application of the coating agent onto the substrate, interaction is likely to occur between the hydrophilic coating film and the surface of the substrate, and high adhesion is likely to be obtained.

(Article)

The present invention also provides an article coated with a cured film of the above-described coating agent comprising the copolymer of the present invention (note that the article is neither elongated medical devices, such as catheters and guide wires, nor constituent members thereof), preferably an article coated with the polymer material. The method for coating an article with a cured film of a coating agent comprising the copolymer of the present invention is not particularly limited, and examples thereof include applying the coating agent of the present invention described above to a surface of an object to be coated or the like followed by heating the coating agent. The article coated with the cured film of the coating agent of the present invention has high hydrophilicity and high water resistance. Examples of such an article include those described later.

The coating agent of the present invention may be used, for example, by applying to or mixing with, for example, optical members such as optical filters, spectacle lenses, in-vehicle lenses, optical lenses, prisms, and beam splitters; mirrors; optical members used for screen surfaces of displays such as liquid crystal displays, plasma displays, electroluminescent displays, and CRT displays, and projection televisions; windows, bodies, etc. of automobiles; exterior walls, window glass, etc. of buildings; fuselages, windowpanes, etc. of aircrafts; wet areas of kitchens, bathrooms, toilets, etc.; solar panels; touch panels of liquid crystal display devices, inner walls of water supply pipes; outer surfaces of inner wires constituting control cables and inner surfaces of outer casings constituting control cables; marine material surfaces such as ship bottoms and aquaculture equipment; sensors; medical devices such as artificial hearts, artificial kidneys, and artificial blood vessels (including neither elongated medical devices, such as catheters and guide wires, nor constituent members thereof; that is, the medical devices referred to in the present invention are medical devices which are neither elongated medical devices nor constituents members thereof); cosmetics to be used for skin care, makeup, hair care, hair styling, etc.; cosmetic tools and containers such as cosmetic puffs, cosmetic pens, and compacts; coloring materials such as inkjet ink, pigment ink, and dye ink; treatment agents for fibers such as paper and cloth; polymer flocculants to be used for sewage treatment; surfactants to be used for detergents, etc.; and hydrophilic primers for electroplating. In that case, high hydrophilicity and high water resistance can be imparted to an article coated with the cured film of the coating agent of the present invention, and as a result, functions such as biocompatibility, antifouling property, protein adhesion preventing property, cell adhesion preventing property, antifogging property, pollen adsorption preventing property, atmospheric fine particle adhesion preventing property, and virus adhesion preventing property can be imparted to the surface of the article.

The method for coating an article with a cured film of a coating agent comprising the copolymer of the present invention is not particularly limited, and examples thereof include applying the coating agent of the present invention described above to a substrate such as a surface of an object to be coated or the like followed by heating the coating agent. The article coated with the cured film of the coating agent of the present invention has high hydrophilicity and high water resistance.

The material constituting the substrate to be coated with the coating agent is not particularly limited, and may be, for example, a metal or a polymer material (resin). From the viewpoint of further enhancing the adhesion of the coating agent, a surface of the substrate preferably contains at least one selected from the group consisting of a metal, a polymer material having a group capable of forming a hydrogen bond, and polyurethane. For example, by applying the above-described coating agent onto a metal substrate, a substrate comprising a polymer material having a group capable of forming a hydrogen bond, or a polyurethane substrate and curing the coating agent, the adhesion between

the resulting hydrophilic cured film (hydrogel layer) and the substrate can be further enhanced.

As the metal constituting the metal substrate, for example, an element that forms a metallic bond, such as iron (Fe), chromium (Cr), nickel (Ni), molybdenum (Mo), cobalt (Co), titanium (Ti), tungsten (W), platinum (Pt), gold (Au), silver (Ag), or tin (Sn), can be used alone or in an alloy state. More specifically, a stainless alloy, a nickel-titanium alloy, a cobalt-chromium alloy, a platinum alloy, tungsten, a silver-tin alloy, and the like can be suitably used.

The "group capable of forming a hydrogen bond" may be a group which contains a hydrogen atom and in which the hydrogen atom forms a covalent bond with an atom having higher electronegativity than the hydrogen atom. Examples of the atom that forms a covalent bond with a hydrogen atom include an oxygen atom (O), a nitrogen atom (N), a sulfur atom (S), and a carbon atom (C). More specifically, examples of the "group capable of forming a hydrogen bond" include a hydroxy group (-OH), an amino group ($-NH_2$), and an imino group (=NH). As the "polymer material having a group capable of forming a hydrogen bond", for example, polyvinyl alcohol (PVA), a modified polyolefin resin having a group capable of forming a hydrogen bond, or the like can be used.

As the polyurethane substrate, synthetic resins having a urethane linkage can be widely used. Specifically, for example, aromatic ether urethane, aromatic carbonate urethane, aromatic ester urethane, aliphatic ether urethane, aliphatic carbonate urethane, aliphatic ester urethane, polyhydroxyurethane, urea urethane partially having a urea linkage, or the like can be used. In particular, aromatic ether urethanes and polyhydroxyurethane are suitably used because they are more superior in flexibility, reactivity, and adhesion.

A cured film of the coating agent comprising the copolymer of the present invention has high hydrophilicity and also has high water resistance. Therefore, the surface of an article coated with the cured film can maintain high hydrophilicity for a long period of time. Furthermore, in one preferred embodiment of the present invention, a cured film of the coating agent comprising the copolymer of the present invention has a property of swelling in water, and the coating film after swelling has high lubricity. Such a coating film has very high biocompatibility, for example, in applications of medical devices such as artificial hearts, artificial kidneys, and artificial blood vessels (in particular, medical devices that are neither elongated medical devices nor constituent members thereof).

The thicknesses of the cured film and the coating film after swelling are not particularly limited, and may be appropriately set according to the application, but can be, for example, approximately 1 μm to 1000 μm.

## EXAMPLES

Hereinafter, the present invention is described in more detail by way of Examples, which, however, do not limit the scope of the present invention. Note that "%" and "part (s)" in Examples represent "% by mass" and "part (s) by mass", respectively, unless otherwise specified.

### [Evaluation of copolymer]

#### (Solubility in water)

A copolymer liquid was spread on a Teflon (registered trademark) tray, and then dried at 70°C for 12 hours in a commercially available vacuum dryer set to 0.1 KPa or less, affording a solid of the copolymer. To 10 parts of the copolymer solid obtained was added 90 parts of water, and the mixture was stirred at room temperature for 30 minutes and then allowed to stand for 24 hours, and the state of the solution was evaluated according to the following criteria.

◦: The solution is clear
×: There remains some solid undissolved in the solution or the solution is cloudy

#### (Solubility in methanol)

Solubility in methanol was evaluated in the same manner as in the evaluation of solubility in water described above except that methanol was used instead of water.

#### (Solubility in ethanol)

Solubility in ethanol was evaluated in the same manner as in the evaluation of solubility in water described above except that ethanol was used instead of water.

#### (Solubility in isopropanol)

Solubility in isopropanol was evaluated in the same manner as in the evaluation of solubility in water described

above except that isopropanol was used instead of water.

(Viscosity-average molecular weight)

Using an Ubbelohde viscometer, the viscosity of a 1% solution of a copolymer was determined at 25°C. The viscosity determined was applied to a viscosity/molecular weight curve prepared using polyvinylpyrrolidone having a known molecular weight, whereby the viscosity-average molecular weight of the copolymer was determined.

(Viscosity characteristic value, K)

Using an Ubbelohde viscometer, the viscosity (v1) of a 1% solution of a copolymer at 25°C was determined in accordance with JIS Z 8803: 2011. In the same manner, the viscosity (v2) of the solvent used to dissolve the copolymer was determined. The K value was determined by applying the relative viscosity value (v1/v2) of the copolymer with respect to the solvent to the Fikentscher equation given below. A lower K value indicates a lower molecular weight, and a higher K value indicates a higher molecular weight.

$$K = (1.5 \log\eta_{rel} - 1)/(0.15 + 0.003c) + (300c\log\eta_{rel} + (c + 1.5c\log\eta_{rel})^2)^{1/2}/(0.15c + 0.003c^2)$$

$\eta_{rel}$: Relative viscosity of copolymer solution to diluting solvent
c: Copolymer concentration (%) in copolymer solution

[Evaluation of coating agent]

(Method for evaluating coating film formability)

A coating agent was applied to glass with a bar coater, and then dried at 125°C for 3 hours, affording a cured film (coating film). The appearance of the cured film was visually checked and evaluated according to the following criteria.

(Evaluation criteria)

◦: It was possible to form a uniform film
△: Cracks and/or white spots were generated in the film after drying, but the film could be formed
×: No film could be formed

[Evaluation of cured film]

(Water resistance 1: Visual evaluation)

2.5 g of a coating agent was spread on a Teflon (registered trademark)-coated tray (10 cm × 10 cm), and then left to stand in an atmosphere of 125°C for 3 hours, affording a cured product. The cured product was peeled off from the tray, 2 parts of the peeled cured product was placed in a container, 98 parts of water was added, and the container was allowed to stand at room temperature for 24 hours. Thereafter, the state of the solution was visually checked and evaluated according to the following criteria.

(Evaluation criteria)

◦: The cured product remains or remains in a swollen state.
×: The cured product has been dissolved.

(Water resistance 2: Analytic evaluation)

The weight (w1) of an empty aluminum cup was measured, and 2.5 g of a coating agent was spread on the aluminum cup and then left to stand for 3 hours in an atmosphere of 125°C, affording a cured product. After measuring

the weight (w2) of the aluminum cup on which the cured product is formed, 40 g of water is added, the aluminum cup is allowed to stand at room temperature for 1 hour, and then the weight (w3) of the aluminum cup from which only the supernatant has been removed is measured. After drying under reduced pressure for 3 hours in an atmosphere at 100°C, the weight (w4) is measured, and the elution rate is calculated from the following formula. A lower elution rate indicates higher water resistance.

(Calculation formula)

Cured product dry weight = w2 − w1

Dry weight after immersion = w4 − w1

Elution rate (%) = (1 − (cured product dry weight − dry weight after immersion)/cured product dry weight) × 100

(Contact angle)

As to the water contact angle of a coating film, 1 μL of a water droplet was brought into contact with the coating piece prepared in the coating film formability evaluation, and after 5 seconds, the water contact angle was measured by a 0/2 method using "DMo-501" manufactured by Kyowa Interface Science Co., Ltd. and image analysis software "FAMAS". A smaller contact angle indicates higher hydrophilicity.

(Weight swelling rate)

In the same manner as in "Water resistance 2: Analytic evaluation" described above, w1 to w4 are measured, and the weight swelling rate is calculated from the following formula. A larger weight swelling rate indicates that the cured film can contain a larger mass of water and also indicates that the cured film is easily swollen and has high gel formability.

(Calculation formula)

Cured product dry weight = w2 − w1

Weight when swollen = w3 − w1

Dry weight after immersion = w4 − w1

Weight swelling rate (times) = weight when swollen/dry weight after immersion

(Film strength)

The samples used for the evaluation of film strength were prepared by providing, as a substrate, a wire having a metal coil section or a wire having a urethane coating layer on the surface of a metal coil portion, and coating a portion of the substrate including the metal coil portion with each of the coating agents prepared in Examples 1 and 8 by a dip coating method (Examples 1a, 1b, 8a, and 8b). As Comparative Examples, coating agents in which a crosslinking agent (HMDA) was not added to the polymers used in Examples 1 and 8 were prepared (Comparative Examples 1c and 8c). After a coating agent was applied, the coating agent was dried for 1 hour using a hot air circulating drying furnace at 120°C to obtain, affording an evaluation sample. The evaluation sample obtained was sandwiched between a urethane roller (AXFM-D25-L15-V8-N, manufactured by MISUMI Corporation) and a stainless steel sheet (SUS304 sheet, 30 × 30 mm) in an underwater environment, and a resistance value when one end connected to a load cell was pulled out with application of a load of 0.981 N was measured. The same measurement was continuously performed 50 times, and the initial resistance value at the first time was compared with the resistance value at the 50th time to evaluate the film strength (adhesion of the film). A smaller resistance value can be evaluated to indicate higher film strength and higher durability during sliding.

(Lubricity)

For the evaluation of lubricity, the same samples as the samples used for the evaluation of film strength were used. Each of the samples was immersed in physiological saline, and thereafter, the feeling when the coated portion was nipped and rubbed with fingertips was compared according to the following criteria. The evaluation results are shown in Table 3 below.

(Evaluation criteria)

◦: The surface slips so good that the sample cannot be held by hand
×: The cured product flows out and the sample exhibited poor slippage

In Examples and Comparative Examples, the monomers given in Table 1 below were used.

[Table 1]

| Abbreviation | Compound Name | Structure |
|---|---|---|
| GCMA | (2-oxo-1,3-dioxolan-4-yl)methyl methacrylate | 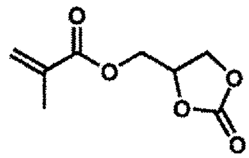 |
| DAAm | Diacetone acrylamide | 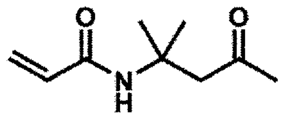 |
| MAMCMB | 2-{dimethyl[3-(2-methylprop-2-eneamido)-propyl] ammonio}acetate | 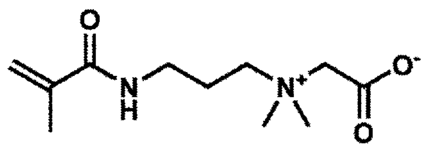 |
| M90G | Methoxypolyethylene glycol methacrylate | 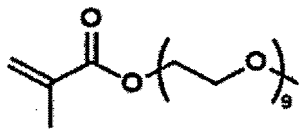 |
| DMAAm | N,N-dimethylacrylamide | 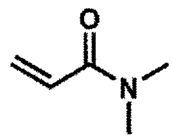 |
| HPMA | Hydroxypropyl methacrylate (mixture of 2-hydroxypropyl and 2-hydroxy-1-methylethyl methacrylate) | 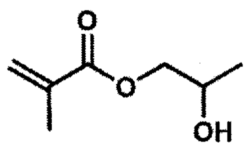 |

[Example 1]

(Synthesis of copolymer 1: GCMA-MAMCMB-M90G)

In a reactor equipped with a condenser, a thermometer, a nitrogen inlet tube and a stirrer, GCMA, MAMCMB and M90G were dissolved in a mixed solvent of water : ethanol = 70 : 30 such that the molar ratio was 10 : 40 : 50 and

the total concentration of the monomers was 10%. Subsequently, dissolved oxygen was removed by purging with an inert gas, and then the temperature was raised to 50°C. When the temperature reached 50°C, 0.2 parts of 2,2'-azobis[2-(2-imidazolin-2-yl)propane] dihydrochloride (Wako Pure Chemical Industries, Ltd., product name: VA-044) was added to initiate a polymerization reaction. The mixture was stirred for 4 hours while the temperature was maintained at 50°C, and then 0.2 parts of VA-044 was further added. The resulting mixture was further stirred for 12 hours while the temperature was maintained at 50°C, affording a solution of copolymer 1. The copolymer 1 obtained had a viscosity-average molecular weight of 140,000.

(Preparation of coating agent 1)

The copolymer 1, hexamethylenediamine (HMDA) as a crosslinking agent, and a mixed solvent of water : ethanol = 70 : 30 were mixed at a mass ratio of 17 : 3 : 80, affording coating agent 1.

[Example 2]

(Synthesis of copolymer 2: GCMA-MAMCMB-M90G)

In a reactor equipped with a condenser, a thermometer, a nitrogen inlet tube and a stirrer, GCMA, MAMCMB and M90G were dissolved in ethanol such that the molar ratio was 10 : 40 : 50 and the total concentration of the monomers was 45% by mass. Subsequently, dissolved oxygen was removed by purging with an inert gas, and then the temperature was raised to 70°C. When the temperature reached 70°C, 0.3 parts by weight of commercially available methyl azoisobutyrate was added to initiate a polymerization reaction. The mixture was stirred for 4 hours while the temperature was maintained at 70°C, and then 0.2 parts by weight of methyl azoisobutyrate was further added. The resulting mixture was further stirred for 12 hours while the temperature was maintained at 70°C, affording a solution of copolymer 2. The copolymer 2 obtained had a viscosity-average molecular weight of 104,000.

(Preparation of coating agent 2)

The copolymer 2, hexamethylenediamine as a crosslinking agent, and ethanol as a solvent were mixed at a mass ratio of 17 : 3 : 80, affording coating agent 2.

[Example 3]

(Synthesis of copolymer 3: GCMA-MAMCMB)

A solution of copolymer 3 was obtained in the same manner as in Example 2 except that M90G was not used and the molar ratio of GCMA to MAMCMB was 10 : 90. The copolymer 3 obtained had a viscosity-average molecular weight of 55,000.

(Preparation of coating agent 3)

Coating agent 3 was obtained in the same manner as in Example 2 except that the copolymer 3 was used instead of the copolymer 2.

[Example 4]

(Synthesis of copolymer 4: GCMA-MAMCMB-M90G)

A solution of copolymer 4 was obtained in the same manner as in Example 2 except that the molar ratio of GCMA, MAMCMB, and M90G was changed to 20 : 40 : 40. The copolymer 4 obtained had a viscosity-average molecular weight of 85,000.

(Preparation of coating agent 4)

Coating agent 4 was obtained in the same manner as in Example 1 except that the copolymer 4 was used instead of the copolymer 1.

[Example 5]

(Synthesis of copolymer 5: GCMA-MAMCMB-M90G)

A solution of copolymer 5 was obtained in the same manner as in Example 2 except that the molar ratio of GCMA, MAMCMB and M90G was changed to 10 : 30 : 60. The copolymer 5 obtained had a viscosity-average molecular weight of 80,000.

(Preparation of coating agent 5)

Coating agent 5 was obtained in the same manner as in Example 1 except that the copolymer 5 was used instead of the copolymer 1.

[Example 6]

(Synthesis of copolymer 6: GCMA-MAMCMB-M90G)

A solution of copolymer 6 was obtained in the same manner as in Example 2 except that the molar ratio of GCMA, MAMCMB, and M90G was changed to 10 : 50 : 40. The copolymer 6 obtained had a viscosity-average molecular weight of 124,000.

(Preparation of coating agent 6)

Coating agent 6 was obtained in the same manner as in Example 1 except that the copolymer 6 was used instead of the copolymer 1.

[Example 7]

(Synthesis of copolymer 7: GCMA-MAMCMB-M90G)

A solution of copolymer 7 was obtained in the same manner as in Example 2 except that the molar ratio of GCMA, MAMCMB and M90G was changed to 10 : 60 : 30. The copolymer 7 obtained had a viscosity-average molecular weight of 98,000.

(Preparation of coating agent 7)

Coating agent 7 was obtained in the same manner as in Example 1 except that the copolymer 7 was used instead of the copolymer 1.

[Example 8]

(Synthesis of copolymer 8: GCMA-DMAAm)

In a reactor equipped with a condenser, a thermometer, a nitrogen inlet tube and a stirrer, GCMA and DMAAm were dissolved in DMF such that the molar ratio was 10 : 90 and the total concentration of the monomers was 30% by mass. Subsequently, dissolved oxygen was removed by purging with an inert gas, and then the temperature was raised to 70°C. When the temperature reached 70°C, 0.15 parts by weight of commercially available methyl azoisobutyrate was added to initiate a polymerization reaction. The mixture was stirred for 4 hours while the temperature was maintained at 70°C, and then 0.3 parts by weight of methyl azoisobutyrate was further added. The resulting mixture was further stirred for 12 hours while the temperature was maintained at 70°C, affording a solution of copolymer 8. The copolymer 8 obtained had a viscosity-average molecular weight of 66,000.

(Preparation of coating agent 8)

The copolymer 8, hexamethylenediamine as a crosslinking agent, and DMF as a solvent were mixed at a mass ratio of 17 : 3 : 80, affording coating agent 8.

[Comparative Example 1]

(Synthesis of copolymer a: DAAm-MAMCMB-HPMA)

A solution of copolymer a was obtained in the same manner as in Example 1 except that DAAm was used as a crosslinkable monomer, MAMCMB and HPMA were used as hydrophilic monomers, the molar ratio of DAAm, MAMCMB and HPMA was set to 10 : 40 : 50, and DAAm, MAMCMB and HPMA were dissolved in a mixed solvent of water: ethanol = 80 : 20. The copolymer a obtained had a viscosity-average molecular weight of 60,000.

(Preparation of coating agent a)

The copolymer a, adipic dihydrazide as a crosslinking agent, and a mixed solvent of water : ethanol = 80 : 20 were mixed at a mass ratio of 9 : 1 : 90, affording coating agent a.

[Comparative Example 2]

(Synthesis of copolymer b: DAAm-MAMCMB-M90G)

A solution of copolymer b was obtained in the same manner as in Comparative Example 1 except that M90G was used in place of HPMA, and the solvent was changed to water. The copolymer b obtained had a viscosity-average molecular weight of 114,000.

(Preparation of coating agent b)

The copolymer b, adipic dihydrazide as a crosslinking agent, and water as a solvent were mixed at a mass ratio of 9 : 1 : 90, affording coating agent b.

[Comparative Example 3]

(Synthesis of copolymer c: DAAm-MAMCMB-DMAAm)

A solution of copolymer c was obtained in the same manner as in Comparative Example 2 except that DMAAm was used in place of M90G, and the solvent was changed to water. The copolymer c obtained had a viscosity-average molecular weight of 200,000.

(Preparation of coating agent c)

Coating agent c was obtained in the same manner as in Comparative Example 2 except that the copolymer c was used instead of the copolymer b.

[Comparative Example 4]

(Synthesis of copolymer d: DAAm-MAMCMB-M90G)

A solution of copolymer d was obtained in the same manner as in Comparative Example 1 except that DAAm, MAMCMB, and M90G were dissolved in water such that the molar ratio was 10 : 40 : 50 and the total concentration of the monomers was 20%. The copolymer d obtained had a viscosity-average molecular weight of 168,000.

(Preparation of coating agent d)

Coating agent d was obtained in the same manner as in Comparative Example 2 except that the copolymer d was used instead of the copolymer b.

[Comparative Example 5]

(Synthesis of copolymer e: DAAm-MAMCMB-M90G)

A solution of copolymer e was obtained in the same manner as in Comparative Example 4 except that a mixed

solvent of water : ethanol = 80 : 20 was used as a solvent in place of water. The copolymer e obtained had a viscosity-average molecular weight of 266,000.

(Preparation of coating agent e)

Coating agent e was obtained in the same manner as in Comparative Example 4 except that the copolymer e was used instead of the copolymer d.

[Comparative Example 6]

(Synthesis of polymer f: GCMA homopolymer)

A solution of polymer f was obtained in the same manner as in Example 2 except that GCMA was dissolved in ethanol such that the concentration thereof was 40% by mass. The polymer f obtained had a viscosity-average molecular weight of 153,000.

(Preparation of coating agent f)

Coating agent f was obtained in the same manner as in Comparative Example 2 except that the polymer f was used instead of the copolymer b. However, because the polymer f was undissolved in a solvent, the evaluations could not be performed.

[Comparative Example 7]

(Synthesis of polymer g: MAMCMB homopolymer)

A solution of polymer g was obtained in the same manner as in Example 1 except that MAMCMB was dissolved in ethanol such that the concentration thereof was 10% by mass. The polymer f obtained had a viscosity-average molecular weight of 95,000.

(Preparation of coating agent g)

Coating agent g was obtained in the same manner as in Comparative Example 6 except that the polymer g was used instead of the polymer f. However, because part of the polymer g was undissolved in a solvent, the evaluations could not be performed.

The monomer compositions of the copolymers obtained in Examples and Comparative Examples are shown in Table 2, and the results of evaluating solubility in water and so on are shown in Tables 3 and 4.

[Table 2]

| | | Copolymer | Monomer composition [mol%] | | | | | | Viscosity-average molecular weight [×10,000] | K |
|---|---|---|---|---|---|---|---|---|---|---|
| | | | Crosslinkable monomer | | Hydrophilic monomer | | | | | |
| | | | Structural unit (A) | - | Structural unit (B) | | | | | |
| | | | GCMA | DAAm | HAMCMB | M90G | DMAAm | HPMA | | |
| Example | 1 | 1 | 10 | - | 40 | 50 | - | - | 14 | 56 |
| | 2 | 2 | 10 | - | 40 | 50 | - | - | 10.4 | 48 |
| | 3 | 3 | 10 | - | 90 | - | - | - | 5.5 | 35 |
| | 4 | 4 | 20 | - | 40 | 40 | - | - | 8.5 | 44 |
| | 5 | 5 | 10 | - | 30 | 60 | - | - | 8.0 | 42 |
| | 6 | 6 | 10 | - | 50 | 40 | - | - | 12.4 | 52 |
| | 7 | 7 | 10 | - | 60 | 30 | - | - | 9.8 | 47 |
| | 8 | 8 | 10 | - | - | - | 90 | - | 6.6 | 38 |
| Comparative Example | 1 | a | - | 10 | 40 | - | - | 50 | 6.0 | 37 |
| | 2 | b | - | 10 | 40 | 50 | - | - | 11.4 | 50 |
| | 3 | c | - | 10 | 40 | - | 50 | - | 20.0 | 66 |
| | 4 | d | - | 10 | 40 | 50 | - | - | 16.8 | 61 |
| | 5 | e | - | 10 | 40 | 50 | - | - | 26.6 | 76 |
| | 6 | f | 100 | - | - | - | - | - | 15.3 | 58 |
| | 7 | g | - | - | 100 | - | - | - | 9.5 | 46 |

[Table 3]

| | | Copolymer | Solubility of copolymer | | | | Coating film formability | Water resistance | | Contact angle [degree] | Weight swelling rate [times] |
|---|---|---|---|---|---|---|---|---|---|---|---|
| | | | Water | MeOH | EtOH | IPA | | 1 | 2 [%] | | |
| Example | 1 | 1 | ○ | ○ | ○ | × | ○ | ○ | 17.8 | 64.6 | 25.5 |
| | 2 | 2 | ○ | ○ | ○ | × | ○ | ○ | 19.7 | 64.6 | 32.8 |
| | 3 | 3 | ○ | ○ | ○ | × | △ | ○ | 27.4 | 54.6 | 26.9 |
| | 4 | 4 | ○ | ○ | ○ | × | ○ | ○ | 15.0 | 53.7 | 17.7 |
| | 5 | 5 | ○ | ○ | ○ | ○ | ○ | ○ | 19.9 | 64.7 | 37.3 |
| | 6 | 6 | ○ | ○ | ○ | × | ○ | ○ | 20.3 | 59.0 | 37.0 |
| | 7 | 7 | ○ | ○ | ○ | × | ○ | ○ | 21.8 | 65.4 | 33.7 |
| | 8 | 8 | ○ | ○ | × | × | ○ | ○ | 19.8 | 42.3 | 5.4 |
| Comparative Example | 1 | a | ○ | ○ | × | × | ○ | × | 85.0 | Not measurable | Not measurable |
| | 2 | b | ○ | ○ | × | × | ○ | × | 90.0 | Not measurable | Not measurable |
| | 3 | c | ○ | ○ | × | × | ○ | × | 100.0 | Not measurable | Not measurable |
| | 4 | d | ○ | ○ | × | × | ○ | × | - | Not measurable | Not measurable |
| | 5 | e | ○ | ○ | × | × | ○ | × | - | Not measurable | Not measurable |
| | 6 | f | × | × | × | × | - | - | - | - | - |
| | 7 | g | ○ | ○ | × | × | - | - | - | - | - |

[Table 4]

| | | Copolymer | Crosslinking agent | Substrate | Film strength (N) | | Lubricity |
|---|---|---|---|---|---|---|---|
| | | | | | Initial resistance value | 50th time resistance value | |
| Example | 1a | 1 | HMDA | Metal | 0.118 | 0.294 | ∘ |
| | 1b | | HMDA | Urethane | 0.049 | 0.078 | ∘ |
| Comparative Example | 1c | | None | Metal | 0.353 | 0.667 | × |
| Example | 8a | 8 | HMDA | Metal | 0.078 | 0.245 | ∘ |
| | 8b | | HMDA | Urethane | 0.039 | 0.059 | ∘ |
| Comparative Example | 8c | | None | Metal | 0.006 | 0.706 | × |

(Adhesion)

<Evaluation of adhesion to metal substrate>

As to the sample used for the evaluation of adhesion to a metal substrate, a stainless steel sheet was used as a substrate, and the coating agent prepared in Example 1 was applied to the substrate in the same manner as in the method for preparing the sample used for the evaluation of film strength. Thus, a coating film was formed. As a comparative example, a polyurethane coating film was formed by a dip method using Pellethane 2360-80AE (manufactured by Lubrizol), which was publicly-known as medical polyurethane.

The adhesion to the metal substrate was evaluated by a cross-cut test (JIS K 5600-5-6, 1999). Specifically, cuts were made on the formed coating film in a grid shape at intervals of 1 mm by using a box cutter, and a transparent adhesive tape was attached thereon and then peeled off. Then, the state of the grid was observed to check the state of peeling of the coating film.

With the coating film formed using the coating agent of Example 1 of the present invention, peeling of the coating film was not observed in any grid (evaluation result was 0 (no peeling)). On the other hand, with the coating film of Comparative Example, peeling was widely found in the region where the test was performed (evaluation result was 4 (large peeling)). As described above, it has been confirmed that the coating film formed using the coating agent containing a structural unit (A) having a cyclic carbonate structure and a structural unit (B) having a hydrophilic structure exhibited superior adhesion to the metal substrate as compared with the coating film of Comparative Example formed using a polyol resin and an isocyanate curing agent.

<Evaluation of adhesion to urethane substrate>

The adhesion of a coating film was evaluated using, as a urethane substrate, a wire having a urethane coating layer on a surface of a metal coil portion. Specifically, the adhesion was compared between a coating film formed from a copolymer containing a structural unit (A) having a cyclic carbonate structure and a structural unit (B) having a hydrophilic structure and a coating film formed from a copolymer containing a structural unit derived from a monomer containing an epoxy group in place of the structural unit (A) having a cyclic carbonate structure. As a coating agent comprising the copolymer containing a structural unit (A) having a cyclic carbonate structure and a structural unit (B) having a hydrophilic structure, the coating agent of Example 1 was used. As the copolymer containing a structural unit derived from a monomer containing an epoxy group in place of the structural unit (A) having a cyclic carbonate structure, a copolymer composed of 40 mol% of MAMCMB, 50 mol% of M90G, and 10 mol% of 4HBAGE, which is a copolymer containing a structural unit derived from 4-hydroxybutyl acrylate glycidyl ether (4HBAGE), was used. The evaluation of the adhesion to the urethane substrate was performed in the same manner as in the "Evaluation of film strength" described above.

Fig. 1 is an explanatory diagram showing the evaluation results of adhesion. In Fig. 1, the horizontal axis indicates the number of times of pulling out the sample and measuring the resistance value (the number of times of slipping), and the vertical axis indicates the resistance value measured (the slipping resistance value). Here, three samples were prepared for each of the wire coated with the coating agent of Example 1 and including a urethane coating layer (in Fig. 1, this is indicated as "Structural unit (A)") and the coated guide wire coated with a copolymer containing a structural unit derived from a monomer containing an epoxy group (in Fig. 1, this is indicated as "Structural unit derived

from epoxy group-containing monomer"), and the above-described test was performed for each sample. As shown in Fig. 1, it has been confirmed that when a coating agent containing a structural unit (A) having a cyclic carbonate structure and a structural unit (B) having a hydrophilic structure is used, a hydrophilic coating film that exhibits superior adhesion to a urethane substrate is obtained as compared with the case of using a coating agent containing a structural unit derived from a monomer containing an epoxy group and a structural unit (B) having a hydrophilic structure.

<Evaluation of catalytic action under low temperature condition>

Using various copolymers with variation in the structural unit (B) having a hydrophilic structure, a hydrophilic coating film was formed under a relatively low temperature condition, and the catalytic action of the structural unit (B) was evaluated. Specifically, copolymers each having, as the structural unit (B) having a hydrophilic structure, a structural unit derived from N,N-dimethylacrylamide (DMAAm), N-vinylpyrrolidone (NVP), N-methacryloyloxyethyl-N,N-dimethylammonium-$\alpha$-N-methylcarboxybetaine (CMB), or methoxyethyl acrylate (MEA) were prepared and evaluated. All of the copolymers contain a structural unit derived from (2-oxo-1,3-dioxolan-4-yl)methyl methacrylate (GCMA) as the structural unit (A) having a cyclic carbonate structure. Each of the copolymers contains 10 mol% of the structural unit (A) and 90 mol% of the structural unit (B). Among the above-recited copolymers, the copolymer having a structural unit derived from DMAAm as the structural unit (B) is the same as the copolymer used in the above-described sample, and has a weight-average molecular weight of about 40,000. The copolymer having a structural unit derived from NVP as the structural unit (B) had a weight-average molecular weight of about 55,000, the copolymer having a structural unit derived from CMB had a weight-average molecular weight of about 100,000, and the copolymer having a structural unit derived from MEA had a weight-average molecular weight of about 40,000.

As a substrate for forming a hydrophilic coating film, a wire having a urethane coating layer on the surface of a metal coil portion was used. After the copolymers described above were prepared, each of the copolymers was dissolved in dimethylformamide to have a concentration of 20 wt%. Immediately before the application to the substrate, a coating agent in which the copolymer was dissolved was mixed with a 5% ethanol solution of hexamethylenediamine (HMDA) as a crosslinking agent at a weight ratio of 5 : 3, and the mixture was sufficiently dissolved. The coating agent to which the crosslinking agent was added was applied onto the substrate by a dip coating method. After the coating agent was applied, a change in viscosity when the coating agent was left to stand at room temperature (26°C) for 1 hour, 2 hours, 3 hours, and 4 hours was measured. The viscosity measurement was performed using a rotary vibration viscometer (VISCOMETER VM-10A-L, available from Sansyo Co., Ltd.) for each of the coating agents left to stand on the substrate as described above.

Fig. 2 is an explanatory diagram showing a change with time in the viscosity of the coating agents containing the respective polymers differing in the structural unit (B). In Fig. 2, the copolymers are distinguished by indicating the type of the structural unit (B). As shown in Fig. 2, it has been confirmed that the viscosity increased with time only in the case of the coating agent having a structural unit derived from DMAAm as the structural unit (B), and crosslinking proceeded even at room temperature. In general, when the hydrophilic structure of the structural unit (B) is a betaine structure containing quaternary ammonium or an amide structure containing tertiary ammonium, it is considered that these quaternary ammonium and tertiary ammonium act as a catalyst for a reaction related to the crosslinking of the coating agent. From the results of Fig. 2, it has been confirmed that especially in the case of having a structural unit derived from DMAAm as the structural unit (B), that is, in the case of having a positively charged quaternary nitrogen atom, the coating agent has a high activity of promoting the reaction related to the crosslinking of the coating agent even under a low temperature condition such as room temperature.

An article coated with a cured product of a coating agent comprising the copolymer of the present invention, which contains at least the structural unit (A) having a cyclic carbonate structure and the structural unit (B) having a hydrophilic structure, has been confirmed to have good water resistance and have a small contact angle with respect to water, and thus have high hydrophilicity.

On the other hand, in Comparative Examples 1 to 5 having another crosslinkable monomer in place of the structural unit (A) having a cyclic carbonate structure, the water resistance was insufficient. Therefore, in the measurement of the contact angle, a coating piece was dissolved at the time when 1 $\mu$L of a water droplet was brought into contact with the coating piece, and the contact angle could not be measured. Similarly, since the cured product was dissolved in water, $w3 \approx w4 = w1$, and the swellability could not be calculated. In Comparative Example 6 having only the structural unit (A) and Comparative Example 7 having only the structural unit (B), a coating agent could not be obtained, and the evaluations could not be performed.

## Claims

**1.** A copolymer comprising at least a structural unit (A) having a cyclic carbonate structure and a structural unit (B)

having a hydrophilic structure.

**2.** The copolymer according to claim 1, wherein the structural unit (B) having the hydrophilic structure is neutral in charge.

**3.** The copolymer according to claim 1, wherein the hydrophilic structure is at least one structure selected from the group consisting of a betaine structure, an amide structure, an alkylene oxide structure, and a lactam structure.

**4.** The copolymer according to claim 1, wherein the hydrophilic structure comprises a betaine structure having at least one atom selected from the group consisting of a positively charged quaternary nitrogen atom, a positively charged tertiary sulfur atom, and a positively charged quaternary phosphorus atom.

**5.** The copolymer according to claim 4, wherein the betaine structure is represented by formula (1):

[Chemical Formula 1]

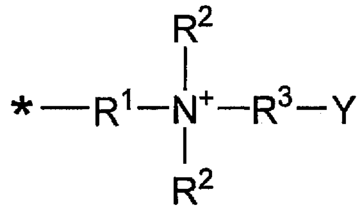

(1)

wherein

$R^1$ represents a linear or branched alkylene group having 1 to 6 carbon atoms,
$R^2$ represents independently at each occurrence a linear or branched alkyl group having 1 to 4 carbon atoms,
$R^3$ represents a linear or branched alkylene group having 1 to 4 carbon atoms,
Y represents $-SO_3^-$ or $-COO^-$, and
* represents a bond.

**6.** The copolymer according to claim 1, wherein a structural unit (A) and a structural unit (B) are each a structural unit derived from a (meth)acrylic monomer or a vinyl monomer.

**7.** A coating agent comprising the copolymer according to any one of claims 1 to 6 and a crosslinking agent.

**8.** The coating agent according to claim 7, comprising at least a first agent and a second agent, wherein the first agent includes the copolymer according to any one of claims 1 to 6, and the second agent includes the crosslinking agent.

**9.** The coating agent according to claim 7, wherein the crosslinking agent is at least one selected from the group consisting of a polyamine and a polyol.

**10.** An article coated with a cured film formed from the coating agent according to claim 7, wherein the article is neither an elongated medical device nor a constituent member thereof.

**11.** The article according to claim 10, wherein the article is coated with a polymer material in which a copolymer having at least a structural unit (B) having a hydrophilic structure is crosslinked in a crosslinked structure represented by the following formula (2):

$$-X^1\text{-}Z\text{-}R^4\text{-}Z\text{-}X^2- \qquad (2)$$

wherein

$X^1$ and $X^2$ represent, each independently, $-CH(OH)-CH(R^6)-O-C(=O)-*$ and/or - $CH(CH(R^6)(OH))-O-C(=O)-*$, * being bonded to Z in the formula (2),
$R^4$ represents a linear or branched alkylene group having 1 to 11 carbon atoms, an alicyclic hydrocarbon group having 3 to 12 carbon atoms containing an alicyclic structure having 3 to 6 carbon atoms, or an aromatic group having 6 to 20 carbon atoms containing an aromatic ring structure having 6 to 10 carbon atoms,

$R^6$ represents a hydrogen atom or a linear or branched alkyl group or alkenyl group having 1 to 4 carbon atoms, wherein at least one hydrogen atom of $R^6$ may be replaced by a halogen atom, and at least one carbon atom (-C-) may be replaced by -O-, -S-, -P-, and
Z represents -O- or -N(-H)-.

[FIG. 1]

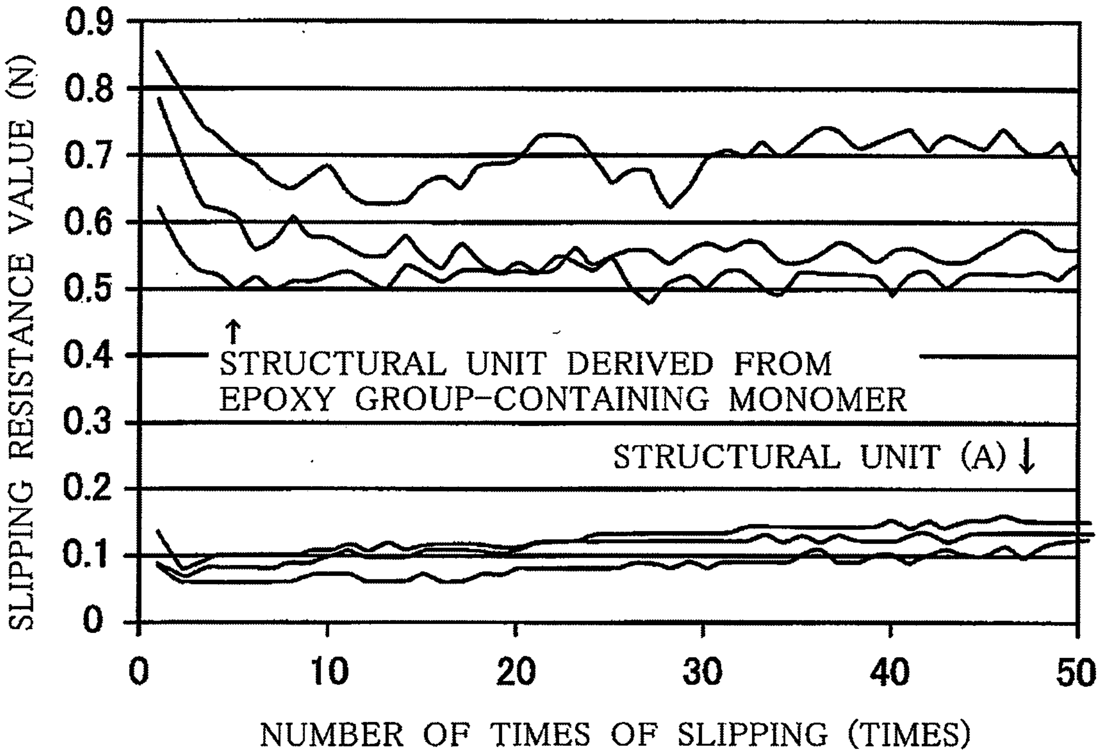
0.9
0.8
0.7
0.6
0.5
0.4
0.3
0.2
0.1
0
SLIPPING RESISTANCE VALUE (N)
↑
STRUCTURAL UNIT DERIVED FROM
EPOXY GROUP-CONTAINING MONOMER
STRUCTURAL UNIT (A) ↓
0
10
20
30
40
50
NUMBER OF TIMES OF SLIPPING (TIMES)

[FIG. 2]

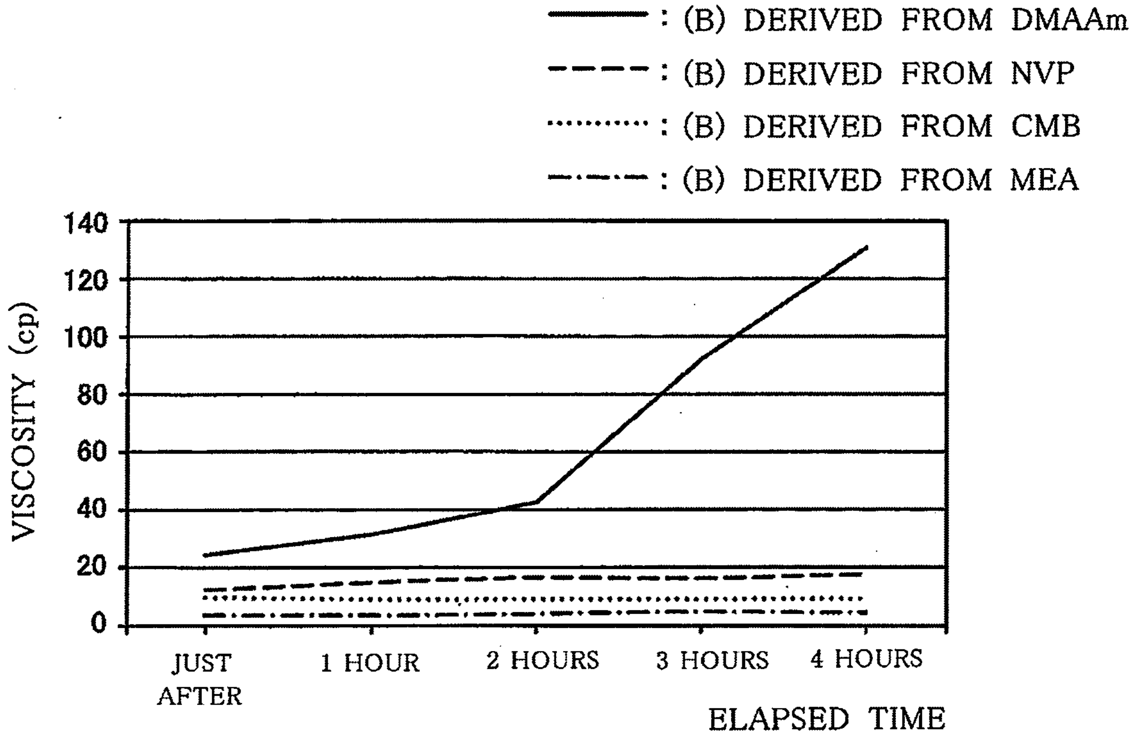
: (B) DERIVED FROM DMAAm
: (B) DERIVED FROM NVP
: (B) DERIVED FROM CMB
: (B) DERIVED FROM MEA
140
120
100
80
60
40
20
0
VISCOSITY (cp)
JUST AFTER
1 HOUR
2 HOURS
3 HOURS
4 HOURS
ELAPSED TIME

## INTERNATIONAL SEARCH REPORT

International application No.
**PCT/JP2022/026065**

**A. CLASSIFICATION OF SUBJECT MATTER**

***C08F 220/28***(2006.01)i; ***C08F 220/60***(2006.01)i; ***C08K 5/17***(2006.01)i; ***C08L 33/14***(2006.01)i; ***C09D 201/00***(2006.01)i
FI: C08F220/28; C08F220/60; C08K5/17; C08L33/14; C09D201/00

According to International Patent Classification (IPC) or to both national classification and IPC

**B. FIELDS SEARCHED**

Minimum documentation searched (classification system followed by classification symbols)

C08F220/28; C08F220/60; C08K5/17; C08L33/14; C09D201/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2015-229770 A (OSAKA ORGANIC CHEM IND) 21 December 2015 (2015-12-21) claims, paragraphs [0022], [0027], [0039]-[0048], examples | 1–3, 6–11<br>4-5 |
| A | JP 2016-84430 A (DAINICHISEIKA COLOR CHEM) 19 May 2016 (2016-05-19) | 1-11 |
| A | JP 2018-40911 A (JSR CORP) 15 March 2018 (2018-03-15) | 1-11 |
| A | JP 2019-513851 A (3M INNOVATIVE PROPERTIES COMPANY) 30 May 2019 (2019-05-30) | 1-11 |
| A | WO 2016/067795 A1 (FUJIFILM CORP) 06 May 2016 (2016-05-06) | 1-11 |
| A | WO 2014/084219 A1 (OSAKA ORGANIC CHEM IND) 05 June 2014 (2014-06-05) | 1-11 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 September 2022** | **13 September 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/026065**

| Patent document cited in search report | Publication date (day/month/year) | Patent family member(s) | Publication date (day/month/year) |
|---|---|---|---|
| JP 2015-229770 A | 21 December 2015 | (Family: none) | |
| JP 2016-84430 A | 19 May 2016 | (Family: none) | |
| JP 2018-40911 A | 15 March 2018 | (Family: none) | |
| JP 2019-513851 A | 30 May 2019 | US 2020/0291240 A1<br>WO 2017/160918 A1<br>CN 108884332 A | |
| WO 2016/067795 A1 | 06 May 2016 | US 2017/0226251 A1<br>US 2019/0248942 A1<br>EP 3213777 A1 | |
| WO 2014/084219 A1 | 05 June 2014 | US 2015/0259570 A1<br>CN 104812857 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015229770 A
- JP 2005036081 A